# EUROPÄISCHE PATENTSCHRIFT

(11) **EP 2 695 836 B1**
(45) Veröffentlichungstag und Bekanntmachung des Hinweises auf die Patenterteilung: **30.10.2019**
(21) Anmeldenummer: 13171485.9
(22) Anmeldetag: 11.06.2013
(51) Int. Cl.: G01F 11/24, B65G 53/34, B65G 53/46

(54) **Verfahren und System zur Förderung von Fördergut mit einer Zellenradschleuse**
Method and system for conveying material with a cellular wheel sluice
Procédé et système pour transporter du matériau à l'aide d'une vanne à roue cellulaire

(30) Priorität: 09.08.2012 DE 102012214185
(43) Veröffentlichungstag der Anmeldung: 12.02.2014
(73) Patentinhaber: Krones AG, 93073 Neutraubling (DE)
(72) Erfinder: Kirchhoff, Tim, 93073 Neutraubling (DE)
(74) Vertreter: Grünecker Patent- und Rechtsanwälte PartG mbB

(56) Entgegenhaltungen:
- CH-A5- 675 573
- DE-A1- 1 926 915
- DE-A1- 2 004 666
- DE-U- 6 809 568
- DE-U1- 20 316 310
- GB-A- 948 109
- US-B2- 7 597 219

## Beschreibung

Die Erfindung betrifft ein Verfahren zur Förderung von Fördergut mit einer Zellenradschleuse, mit den Verfahrensmerkmalen des Oberbegriffs von Patentanspruch 1 bzw. ein zur Durchführung des Verfahrens bestimmtes System mit den Merkmalen des Oberbegriffs des Anspruchs 6.

Zellenradschleusen werden üblicherweise dazu eingesetzt, Fördergut zu dosieren oder in Schüttgutprozesse ein- und auszutragen. Die Zellenradschleusen können dabei z.B. in Recyclinganlagen, Silos, Bunkern, Mischern, Trocknern, Mühlen oder in Förderstrecken verbaut sein und werden hauptsächlich zum Abtrennen von Maschinen oder Prozessen mit unterschiedlichen Druckbereichen, sowie zur volumetrischen Dosierung verwendet.

Bei derartigen Verfahren wird das Fördergut in einem Gehäuse durch Rotorblätter des rotierenden Zellenrades gefördert, wobei die Rotorblätter dabei Rotorzellen bilden, durch die das Fördergut weiterbewegt wird. Das Zellenrad wird passend zum Gehäuse so hergestellt, dass durch die engen Toleranzen zwischen dem Zellenrad und dem Gehäuse und/oder durch Abdichtungen ein Druckausgleich oder ein Durchströmen zwischen den Ein- und Austrittsöffnungen der Schleuse verhindert wird. Während der Rotation nimmt jede Rotorzelle des Zellenrades an der Eintrittsöffnung das Fördergut auf und gibt dieses an der Austrittsöffnung wieder ab. Die Förderleistung wird dabei im Wesentlichen durch das Volumen der Zellen und die Drehzahl des rotierenden Zellenrades bestimmt.

Zur Abdichtung des rotierenden Zellenrades gegenüber dem Gehäuse werden üblicherweise Dichtlippen an den Rotorblättern und/oder mindestens eine Dichtfläche an dem Gehäuse aus einem Dichtungsmaterial wie Ethylen-Propylen-Dien-Kautschuk, Polyvinylchlorid, Polytetrafluorethylen, Polyester-Urethan-Kautschuk, Silikon, Fluorsilikon eingesetzt. Diese Dichtungsmaterialien weisen unterschiedliche Shorehärten auf und können einen elastomeren und/oder thermoplastischen Kunststoff umfassen. Dichtlippen können dabei mit einer Gewebeeinlage und/oder einer Beschichtung ausgeführt sein. Durch die Flexibilität der Dichtungsmaterialien kann die Abdichtung zum Gehäuse während der Rotation des Zellenrades gewährleistet werden, insbesondere damit Unebenheiten der Dichtlippen und/oder der Dichtfläche ausgeglichen werden. Somit wird eine Durchströmung in Fluss- oder Gegenflussrichtung von dem Fördergut oder einem Gas unterbunden.

Die Druckschrift DE 68 09 568 U offenbart eine Zellenradschleuse, die zur Förderung von Kunststoffgranulat bestimmt ist und bei der die an der Gehäusewand entlang gleitenden Kanten des Zellenrades austauschbar und aus einem Kunststoffmaterial sind. Aus dieser Veröffentlichung ergeben sich ferner die Merkmale der Oberbegriffe der unabhängigen Ansprüche 1 und 6.

Die Druckschrift US 7 597 219 B2 offenbart eine Zellenradschleuse, bei der an den Enden der Rotorblätter Dichtungen mit einem Federelement und einer laminierten Schutzschicht angeordnet ist.

In der Druckschrift DE 1 926 915 A1 wird eine Zellenradschleuse offenbart, bei der die Zellenzwischenwände aus mehreren elastischen Einzeldichtelementen bestehen.

Nachteilig bei derartigen Zellenradschleusen ist, dass durch die Reibung der Dichtlippen mit den Dichtflächen ein Abrieb entstehen kann, der das Fördergut kontaminiert und somit wird die Qualität des weiterverarbeiteten Förderguts beeinträchtigt.

Aufgabe der Erfindung ist es, ein Verfahren und ein System bereitzustellen, welche eine Verringerung der Qualität des Fördergutes durch den Abrieb des Dichtungsmechanismus der Zellenradschleuse verhindern.

Zur Lösung der Aufgabenstellung stellt die Erfindung ein Verfahren zur Förderung von Fördergut mit einer Zellenradschleuse mit den Merkmalen des Anspruchs 1 bereit. Vorteilhafte Ausführungsformen der Erfindung sind in den Unteransprüchen genannt.

Dadurch, dass das abriebfähige Material der verwendeten Dichtlippen dem Material entspricht, das im Fördergut enthalten ist, entsteht durch die Reibung der Dichtlippen auf der Dichtfläche nur Abrieb aus Material, das auch im Fördergut enthalten ist und somit wird das Fördergut nicht mit einem fremden Material kontaminiert. Ebenso ist so der Abrieb im Fördergut nach dem Durchlauf durch die Zellenradschleuse nicht mehr nachweisbar. Der entstandene Abrieb verhält sich beispielsweise beim Einschmelzen des Förderguts so, dass die Schmelze aus dem homogenen, gewünschten Fördergut besteht. Somit bilden sich in dem späteren Produkt keine qualitätsmindernden Einschlüsse von Fremdmaterial.

Anders gesagt, können an den Rotorblättern Dichtlippen aus einem abriebfähigen Material eingesetzt werden, welches im Fördergut enthalten ist. Dass die Dichtlippen der Rotorblätter an mindestens einer Dichtfläche des Gehäuses anliegen, kann bedeuten, dass die Dichtlippen vollflächig oder teilflächig an der Dichtfläche anliegen, und dass insbesondere zwischen den Teilflächen ein Spalt ausgebildet ist. Die Dichtlippen können dabei in Kontakt mit der Dichtfläche des Gehäuses stehen. Für die Dichtfläche des Gehäuses kann dabei ein Material verwendet werden, welches härter ist als das Material der Dichtlippen. Dadurch entsteht der Abrieb im Bereich der Dichtlippen.

Ebenso kann für die mindestens eine Dichtfläche des Gehäuses ein abriebfähiges Material verwendet werden, das im Fördergut enthalten ist, wobei insbesondere für die Dichtlippen der Rotorblätter ein Material verwendet wird, das härter als das Material der Dichtfläche ist. Dadurch entsteht der Abrieb im Bereich der Dichtfläche.

Das Verfahren zur Förderung von Fördergut kann dafür vorgesehen sein, Fördergut zu fördern und/oder zu dosieren und/oder mindestens zwei Prozessabschnitte gegeneinander abzudichten. Es werden das gesamte Zellenrad, die Rotorblätter des Zellenrads oder die Dichtlippen ausgetauscht, wenn sie auf ein bestimmtes Material im Fördergut angepasst werden.

Abriebfähiges Material bedeutet hier, dass durch die Bewegung der Dichtlippen entlang der Dichtflächen ein Abrieb entsteht. Der Abrieb kann insbesondere Partikel des abriebfähigen Materials umfassen.

Als abriebfähiges Material der Dichtlippen wird Polyethylen, Polypropylen, Polystyrol, Polymethylmethacrylat, Polyamide, Polyester, insbesondere Polycarbonate und Polyethylenterephthalat, Polyethylenglykol, Polyoxymethylen, Dendrimere, Polyester-Urethan-Kautschuk, Silikon und/oder Fluorsilikon verwendet. Als abriebfähiges Material der Dichtfläche und/oder der Dichtlippen kann insbesondere ein thermoplastischer Kunststoff gewählt werden. Dadurch werden die thermoplastischen Kunststoffe beim Recycling nicht kontaminiert.

Vorzugsweise kann als abriebfähiges Material der Dichtfläche Polyethylen, Polypropylen, Polystyrol, Polymethylmethacrylat, Polyamide, Polyester (Polycarbonate und Polyethylenterephthalat), Polyethylenglykol, Polyoxymethylen, Dendrimere, Polyester-Urethan-Kautschuk, Silikon und/oder Fluorsilikon verwendet werden.

Vorzugsweise kann als Dichtlippen eine Lamellen- oder Borstenstruktur verwendet werden. Dadurch kann auch ein steifes Material in eine Form gebracht werden, die sich ähnlich eines weichen Vollmaterials leicht verformt und somit kann mit einem solchen Material eine gute Abdichtung erreicht werden.

Nach einer Variante der Erfindung können insbesondere als Dichtlippen Pakete von Folienelementen aus einem abriebfähigen Material verwendet werden. Dadurch können die Dichtlippen besonders einfach aufgebaut werden. Die Folienelemente werden gemäß dem kennzeichnenden Teil von Anspruch 1 aus einem abriebfähigen Material gebildet, das im Fördergut enthalten ist. Das Paket von Folienelementen kann eine Anzahl von Folien in einem Bereich von 2 bis 100, insbesondere in einem Bereich von 10 bis 30 Folien umfassen. Die Rotorblätter können dabei als Klemmelemente ausgebildet sein, zwischen denen die Folienelemente eingespannt sind. Die Klemmelemente können insbesondere mit mindestens einer Schraube geklemmt werden. Insbesondere können Folienelemente verwendet werden, die länger als der Spalt zwischen Rotorblättern und Dichtfläche sind. Dadurch werden die Folienelemente etwas verbogen, so dass sie einen Druck auf die Dichtfläche ausüben. Ebenso können die Folienelemente mit einer Lamellen- oder Borstenstruktur nach Anspruch 2 ausgeführt sein.

Bei dem Verfahren können insbesondere Kanten der Folienelemente an der Dichtfläche entlang gleiten. Alternativ können die Kanten der Folienelemente senkrecht zur Bewegungsrichtung der Rotorblätter an der Dichtfläche entlang gleiten.

Bei dem Verfahren können Dichtlippen verwendet werden, bei denen ein elastisches Kernmaterial mit einer Beschichtung aus dem abriebfähigen Material versehen ist. Ebenso können dabei Dichtlippen verwendet werden, die schlauchartig aus dem abriebfähigen Material aufgebaut sind.

Zur Lösung der Aufgabenstellung stellt die Erfindung auch ein System mit den Merkmalen des Anspruchs 6 bestehend aus einem Fördergut und einer Zellenradschleuse zur Förderung des Förderguts und zur Durchführung des Verfahrens nach einem der Ansprüche 1 - 5 bereit. Vorteilhafte Ausführungsformen der Erfindung sind in den Unteransprüchen genannt.

Dadurch, dass die Dichtlippen zur Abdichtung an der Dichtfläche anliegen und sich durch das rotierbar angeordnete Zellenrad gegeneinander bewegen, entsteht ein Abrieb aus dem Material der Dichtlippen. Dieser Abrieb gelangt ins Fördergut und nachdem das Fördergut bereits das gleiche Material enthält, erfolgt somit keine Kontamination des Fördergutes durch Fremdmaterial. Somit wird das Fördergut nicht verunreinigt und die Qualität wird somit nicht negativ beeinflusst.

Die Dichtlippen umfassen ein Material aus Polyethylen, Polypropylen, Polystyrol, Polymethylmethacrylat, Polyamide, Polyester, insbesondere Polycarbonate und Polyethylenterephthalat, Polyethylenglykol, Polyoxymethylen, Dendrimere, Polyester-Urethan-Kautschuk, Silikon und/oder Fluorsilikon. Dadurch kann insbesondere bei Recyclingprozessen eine Verunreinigung des recycelten Materials vermieden werden.

Die Dichtfläche kann ein Material aus Polyethylen, Polypropylen, Polystyrol, Polymethylmethacrylat, Polyamide, Polyester (Polycarbonate und Polyethylenterephthalat), Polyethylenglykol, Polyoxymethylen, Dendrimere, Polyester-Urethan-Kautschuk, Silikon und/oder Fluorsilikon umfassen.

Die Dichtlippen können eine Lamellen- und/oder Borstenstruktur aufweisen. Dadurch kann die Flexibilität der Dichtlippen erhöht und somit die Abdichtung verbessert werden. Die Lamellen- und/oder Borstenstruktur kann so ausgeführt sein, dass diese länger als der Spalt zwischen den Rotorblättern und der Dichtfläche ist. Insbesondere kann die Lamellen- und/oder Borstenstruktur so vorgespannt sein, dass diese beim Anliegen an der Dichtfläche leicht gekrümmt ist. Dadurch können Unebenheiten der Dichtfläche durch eine Krümmungsänderung der Lamellen- und/oder Borstenstruktur ausgeglichen werden.

Nach einer Variante der Erfindung können die Dichtlippen Pakete von Folienelementen umfassen. Die Folienelemente sind erfindungsgemäß aus einem abriebfähigen Material gebildet, das im Fördergut enthalten ist. Dadurch kann eine elastische Form der Dichtlippen erzielt werden, insbesondere falls das in dem Fördergut enthaltene Material eine hohe Steifigkeit aufweist. Die Pakete von Folienelemente können jeweils zwischen Klemmelementen eingespannt sein. Insbesondere können die Klemmelemente so ausgebildet sein, dass die Einspannkraft mit mindestens einer Schraube aufgebracht wird. Die Folienelemente eines Pakets können die gleiche Größe haben. Die Folienelemente können länger als der Spalt zwischen den Rotorblättern und der Dichtfläche ausgebildet sein und insbesondere so vorgespannt sein, dass sie eine Krümmung aufweisen. Dadurch werden Unebenheiten der Dichtlippen und der Dichtfläche besser ausgeglichen und eine höhere Dichtwirkung erzielt.

Die Folienelemente können senkrecht zur Bewegungsrichtung der Rotorblätter angeordnet sein. Die Enden der Folienelemente und die Dichtfläche können einen Winkel einschließen, der in einem Bereich von 45° bis 90° oder vorzugsweise in einem Bereich von 80° bis 90° liegt. Durch diese Anordnung der Folienelemente gegenüber der Dichtfläche wird eine möglichst große Kraft der Folienelemente auf die Dichtflächen ausgeübt und somit eine hohe Dichtwirkung erzielt. Anders ausgedrückt, stoßen die Folienelemente möglichst senkrecht auf die Dichtflächen. Damit kann die Zellenradschleuse nicht nur zum Fördern, sondern auch zum Abdichten von Prozessmaschinen und Behältern dienen, sowie zum dosieren von Schüttgütern.

Die Folienelemente können eine Dicke in einem Bereich von 50 µm bis 500 µm oder insbesondere in einem Bereich von 190 µm bis 350 µm aufweisen.

Die Dichtfläche kann so angeordnet sein, dass sie das Zellenrad mindestens teilweise umschließt. Dadurch laufen die Dichtlippen an den äußeren Bereichen der Rotorblätter und weisen eine besonders einfache Form auf. Anders ausgedrückt kann die Dichtfläche eine zylindrische oder konische Form aufweisen. Insbesondere kann das Zellenrad innerhalb der Dichtfläche rotierbar angeordnet sein.

Die Dichtlippen können an den Rotorblättern austauschbar befestigt sein. Ebenso können die Rotorblätter am Zellenrad austauschbar befestigt sein. Dadurch kann das Material der Dichtlippen in einer einfachen Weise an das jeweilige Fördergut angepasst werden. Weitere Merkmale und Vorteile der Erfindung werden nachfolgend anhand der beispielhaften Figuren erläutert. Dabei zeigt
Figur 1 eine Darstellung einer Zellenradschleuse zur Förderung von Fördergut in einer seitlichen Darstellung;
Figur 2a eine Darstellung einer weiteren Ausführungsform einer Zellenradschleuse zur Förderung von Fördergut in einer seitlichen Ansicht; und
Figur 2b eine Detailansicht eines Rotorblatts mit Dichtlippe der in Figur 2a dargestellten Zellenradschleuse.

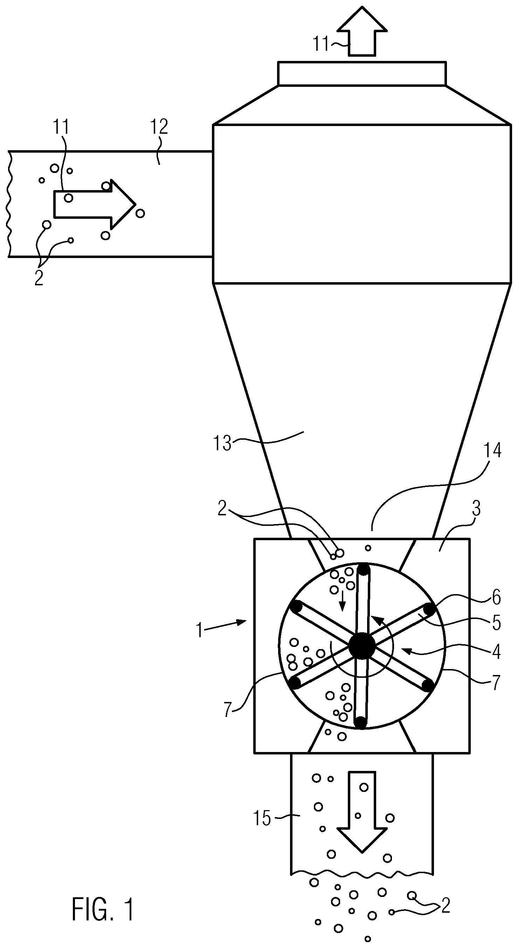

Figur 1 zeigt eine Zellenradschleuse 1 zur Förderung von Fördergut 2 in einer seitlichen Ansicht. Zu sehen ist ein Zyklon 13 in dem ein Gemisch aus einem Fördergut 2 und einem Fördergas 11 getrennt wird und anschließend das Fördergut 2 in der Zellenradschleuse 1 von einer Eintrittsöffnung 14 zu einer Austrittsöffnung 15 weiter gefördert wird. Dabei liegt im Bereich der Eintrittsöffnung 14 ein höherer Druck vor als im Bereich der Austrittsöffnung 15. Das Fördergut 2 ist hier beispielsweise Polyethylen.

Das Fördergut 2 gelangt gemeinsam mit dem Fördergas 11 in den Zulauf 12 des Zyklons 13. Dabei hat das Fördergas 11 eine so hohe Fließgeschwindigkeit, dass das Fördergut 2 durch ein vorgeschaltetes Rohrleitungssystem (hier nicht dargestellt) und den Zulauf 12 gefördert wird. Durch die hohe Fließgeschwindigkeit des Fördergases 11 entsteht in dem Zyklon 13 ein Wirbel unter hohem Druck, wobei sich die Fließgeschwindigkeit in dem konisch zulaufenden Teil des Zyklons 13 nach unten hin erhöht, so dass das Fördergut 2 von dem Fördergas 11 mittels der auf das Fördergut 2 einwirkenden Fliehkräfte getrennt wird. In dem Zyklon 13 entweicht somit das Fördergas 11 nach oben und das Fördergut 2 gelangt zur Eintrittsöffnung 14 der Zellenradschleuse 1 nach unten.

Unterhalb des Zyklons 13 ist eine Zellenradschleuse 1 angeordnet, um die Abscheidung des Fördergutes 2 in die nachfolgenden Aggregate mit einem möglichst geringen Druckverlust im Zyklon 13 zu erreichen. Entsteht in dem Zyklon 13 eine Gegenströmung verschlechtert sich die Abscheidung des Fördergutes 2 aus dem Fördergas 11. Es kommt so zu Verlusten von Fördergut 2 über die Abscheidung des Fördergases 11 nach oben aus dem Zyklon 13.

Um einen derartigen Druckverlust durch die Zellenradschleuse 1 zu vermeiden, sind die Rotorblätter 5 mit Dichtlippen 6 ausgeführt, so dass das rotierende Zellenrad 4 formschlüssig an den Dichtflächen 7 des Gehäuses 3 anliegt. Hierbei stehen die Dichtlippen 6 unter einer Vorspannung, so dass durch Toleranzen bedingte Unebenheiten der Dichtflächen 7 über eine entsprechende Verformung der Dichtlippen 6 ausgeglichen werden können. Gleichzeitig ist die Reibung zwischen den Dichtlippen 6 und den Dichtflächen 7 so gewählt, dass ein hier nicht dargestelltes Antriebsaggregat das Zellenrad 4 antreiben kann.

Durch die Reibung zwischen den Dichtlippen 6 und den Dichtflächen 7 kommt es zu einem Abrieb, der vorwiegend aus dem weicheren Material der beiden Reibpartner besteht. Bei der dargestellten Zellenradschleuse 1 bestehen die Dichtlippen 6 und das Fördergut 2 aus Polyethylen. Gleichzeitig bestehen die Dichtflächen 7 aus einer Stahllegierung. Die Dichtlippen 6 sind somit aus dem weicheren, abriebfähigen Material gebildet, das sich insbesondere im direkten Kontaktbereich von Dichtlippen 6 und Dichtfläche 7 befindet. In der dargestellten Zellenradschleuse 1 wird somit vorwiegend das Material der Dichtlippen 6 abgerieben und gelangt zusammen mit dem Fördergut 2 über die Austrittsöffnung 15 zu weiteren Verarbeitungseinheiten (hier nicht dargestellt). Die Dichtlippen 6 sind zur Anpassung an das Fördergut 2 austauschbar ausgeführt.

Da in diesem System sowohl das Material der Dichtlippen 6 als auch das Material des Förderguts Polyethylen ist, kann der Abrieb der Dichtlippen 6 problemlos in weiteren Prozessschritten mit verarbeitet werden, ohne dass sich eine Qualitätsminderung des Fördergutes 2 oder der daraus gefertigten Produkte ergibt.

In einer alternativen, nicht erfindungsgemäßen Ausführungsform kann das abriebfähige Material der Dichtfläche 7 im Fördergut 2 enthalten sein, und die Dichtlippen 6 aus einem härteren Material als die Dichtflächen 7. Beispielsweise können die Dichtflächen 7 aus dem abriebsfähigen Material als Gehäuseeinsatz (hier nicht dargestellt) gefertigt sein, der aus dem Gehäuse 3 entnommen werden kann. Somit entsteht der Abrieb auf der Seite der Dichtfläche 7 und gelangt von hier ebenfalls ins Fördergut 2. Nachdem jedoch hier ebenfalls der Abrieb aus dem gleichen Material ist wie das Fördergut 2, wird hier ebenfalls das Fördergut 2 nicht mit fremden Material kontaminiert.

Das Fördergut 2 gelangt anschließend in weitere Prozessschritte, wobei hier beispielsweise Granulat für Spritzgussanlagen erzeugt wird.

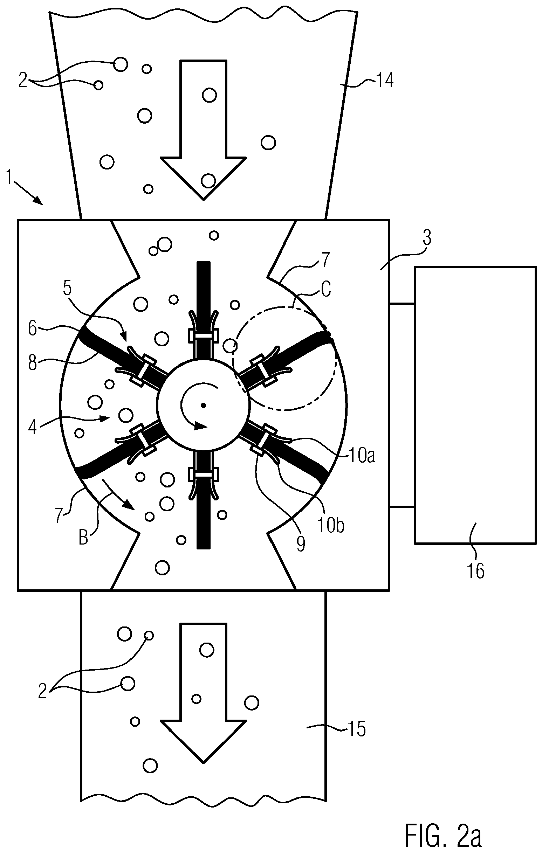

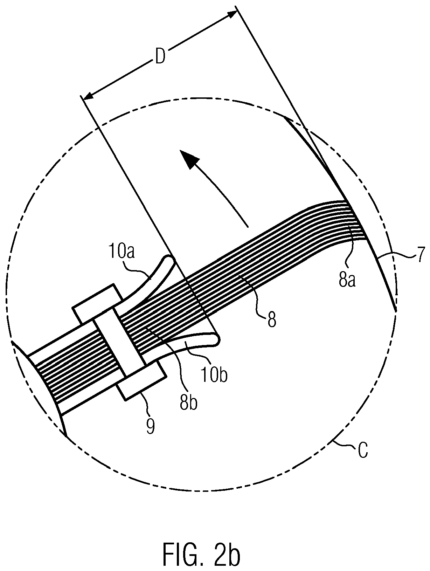

Figur 2a und 2b zeigen eine Darstellung einer weiteren Ausführungsform einer Zellenradschleuse 1 zur Förderung von Fördergut 2 in einer Seitenansicht. Hierbei zeigt Figur 2b einen Detailausschnitt C aus Figur 2a. Zu sehen ist eine Zellenradschleuse 1, bei der Fördergut 2 über eine Eintrittsöffnung 14 zu dem in einem Gehäuse 3 rotierende Zellenrad 4 gelangt, und von diesem zur Austrittsöffnung 15 weiter befördert wird. Das Zellenrad 4 wird dabei von einem Antriebsaggregat 16 angetrieben, das als Elektromotor ausgeführt ist. Über ein hier nicht dargestelltes Getriebe wird die Antriebskraft des Antriebsaggregats 16 auf das Zellenrad 4 übertragen.

Das Innere des Gehäuses 3 weist hierbei eine zylindrische Form auf, in der das Zellenrad 4 rotieren kann. Das Zellenrad 4 weist dabei sechs Rotorblätter 5 auf, welche mit Dichtlippen 6 versehen sind, die die Rotorblätter 5 gegenüber der zylindrischen Dichtfläche 7 abdichten. Somit umschließt die zylindrische Dichtfläche 7 das Zellenrad 4.

Die Dichtlippen 6 der Rotorblätter 5 sind hier als Pakete von Folienelementen 8 ausgeführt, wobei zwischen zwei Klemmelementen 10a und 10b die Folienelemente 8 mittels einer Schraube 9 eingespannt sind. Ebenso kann die Einspannung mit mehreren Schrauben ausgeführt sein. Die Klemmung durch die Klemmelemente 10a und 10b erfolgt dabei am Einspannungsende 8b der Folienelemente 8. Alle Folienelemente 8 haben hierbei die gleiche Form. Dabei bilden die Klemmelemente 10a und 10b das Rotorblatt 5 und die vorstehenden Folienelemente 8 die Dichtlippe 6. Zwischen der Dichtfläche 7 und den Rotorblättern 5 ist somit ein Abstand D, in dessen Bereich die Folienelemente 8 quer zu deren Oberfläche und in Laufrichtung des Zellenrades 4 ungestützt sind. Somit krümmen sich die Folienelemente 8 am äußeren Ende 8a entgegen der Bewegungsrichtung des Zellenrades 4. Die äußeren Enden 8a der Folienelemente 8 schließen mit der Dichtfläche 7 einen Winkel von 85° ein. Somit sind die Folienelemente 8 vorgespannt und üben eine Kraft auf die Dichtfläche 7 aus, so dass Unebenheiten leicht ausgeglichen werden können. Das Paket besteht dabei aus 20 Polyethylen-Folienelementen 8 mit jeweils einer Dicke von 250 µm. Somit kann eine optimale Dichtwirkung erzielt werden.

Bei der Rotation des Zellenrades 4 entsteht durch die Reibung zwischen den Folienelementen 8 und den Dichtflächen 7 eine Reibung und somit ein entsprechender Abrieb. Dieser besteht vorwiegend aus Polyethylen, da die Folienelemente 8 aus diesem Material gefertigt sind und somit weicher sind als die aus Stahl gefertigten Dichtflächen 7. Da jedoch der Abrieb und das Fördergut 2 aus demselben Material bestehen, erfolgt auch hier keine Kontamination des Fördergutes 2. Somit wird durch den Abrieb auch hier das Fördergut 2 nicht in seiner Qualität gemindert.

Die Folienelemente 8 und damit die Dichtlippen 6 sind in der Darstellung austauschbar ausgeführt. Somit können die Dichtlippen 6 entsprechend dem geförderten Fördergut 2 so angepasst werden, dass sie aus dem gleichen, abriebfähigen Material bestehen.

Die in den Figuren 2a und 2b dargestellten Dichtlippen 6 aus Paketen von Folienelementen 8 können auch in jeglicher Form von Zellenradschleuse 1 eingesetzt werden, da die Folienelemente 8 eine besonders hohe Flexibilität und damit Dichtwirkung aufweisen.

## Patentansprüche

1. Verfahren zur Förderung von Fördergut (2) mit einer Zellenradschleuse (1), wobei in einem Gehäuse (3) das Fördergut (2) mit Rotorblättern (5) des rotierenden Zellenrades (4) gefördert wird und Dichtlippen (6) der Rotorblätter (5) an mindestens einer Dichtfläche (7) des Gehäuses (3) anliegen, wobei die Zellenradschleuse ferner austauschbar befestigte Rotorblätter und/oder Dichtlippen aufweist,
**dadurch gekennzeichnet, dass**
beim Transport eines bestimmten Förderguts (2) Dichtlippen (6) verwendet werden, die aus einem abriebfähigen Material gebildet werden, das im Fördergut (2) enthalten ist, wobei durch die Bewegung der Dichtlippen (6) entlang der mindestens einen Dichtfläche (7) ein Abrieb entsteht,
dass das gesamte Zellenrad (4), die Rotorblätter des Zellenrads oder die Dichtlippen (6) ausgetauscht werden, wenn sie auf ein bestimmtes Material im Fördergut (2) angepasst werden, und
dass als abriebfähiges Material der Dichtlippen (6) Polyethylen, Polypropylen, Polystyrol, Polymethylmethacrylat, Polyamide, Polyester, insbesondere Polycarbonate und Polyethylenterephthalat, Polyethylenglykol, Polyoxymethylen, Dendrimere, Polyester-Urethan-Kautschuk, Silikon und/oder Fluorsilikon verwendet wird.

2. Verfahren zur Förderung von Fördergut (2) mit einer Zellenradschleuse (4) nach Anspruch 1, wobei als Dichtlippen (6) eine Lamellen- oder Borstenstruktur verwendet wird.

3. Verfahren zur Förderung von Fördergut (2) mit einer Zellenradschleuse (4) nach Anspruch 1, wobei als Dichtlippen (6) Pakete von Folienelementen (8) aus einem abriebfähigen Material verwendet werden.

4. Verfahren zur Förderung von Fördergut (2) mit einer Zellenradschleuse (4) nach Anspruch 3, wobei Kanten der Folienelemente (8) an der Dichtfläche (7) entlang gleiten.

5. Verfahren zur Förderung von Fördergut (2) mit einer Zellenradschleuse (4) nach Anspruch 3, wobei Kanten der Folienelemente (8) senkrecht zur Bewegungsrichtung (B) der Rotorblätter (5) an der Dichtfläche entlang gleiten.

6. System bestehend aus einem Fördergut und einer Zellenradschleuse (1) zur Förderung des Förderguts (2) und zur Durchführung des Verfahrens nach einem der Ansprüche 1 - 5, umfassend ein Gehäuse (3) mit mindestens einer Dichtfläche (7) und ein darin rotierbar angeordnetes Zellenrad (4), wobei das Zellenrad (4) mehrere Rotorblätter (5) mit Dichtlippen (6) umfasst, die zur Abdichtung an der Dichtfläche (7) anliegen, wobei die Zellenradschleuse ferner austauschbar befestigte Rotorblätter und/oder Dichtlippen aufweist,
**dadurch gekennzeichnet, dass**
abhängig von dem Fördergut (2) die Zellenradschleuse (1) mit Dichtlippen (6) versehen ist, die aus einem abriebfähigen Material gebildet sind, das in dem Fördergut (2) enthalten ist, wobei durch die Bewegung der Dichtlippen (6) entlang der mindestens einen Dichtfläche (7) ein Abrieb entsteht,
dass das gesamte Zellenrad (4), die Rotorblätter (5) am Zellenrad (4) oder die Dichtlippen (6) an den Rotorblättern (5) austauschbar befestigt sind, und
dass die Dichtlippen (6) ein Material aus Polyethylen, Polypropylen, Polystyrol, Polymethylmethacrylat, Polyamide, Polyester, insbesondere Polycarbonate und Polyethylenterephthalat, Polyethylenglykol, Polyoxymethylen, Dendrimere, Polyester-Urethan-Kautschuk, Silikon und/oder Fluorsilikon umfassen, das jeweils auch im Fördergut (2) enthalten ist.

7. System nach Anspruch 6, wobei die Dichtlippen (6) eine Lamellen- und/oder Borstenstruktur aufweisen.

8. System nach dem Oberbegriff des Anspruchs 6, wobei die Dichtlippen (6) Pakete von Folienelementen (8) umfassen.

9. System nach Anspruch 8, wobei die Folienelemente (8) senkrecht zur Bewegungsrichtung (B) der Rotorblätter (5) angeordnet sind.

10. System nach wenigstens einem der Ansprüche 8 bis 9, wobei die Enden (8a) der Folienelemente (8) und die Dichtfläche (7) einen Winkel einschließen, der in einem Bereich von 45° bis 90° oder in einem Bereich von 80° bis 90° liegt.

11. System nach wenigstens einem der Ansprüche 8 bis 10, wobei die Folienelemente (8) eine Dicke in einem Bereich von 50 µm bis 500 µm oder insbesondere in einem Bereich von 190 µm bis 350 µm aufweisen.

12. System nach wenigstens einem der Ansprüche 6 - 11, wobei die Dichtfläche (7) so angeordnet ist, dass sie das Zellenrad (4) mindestens teilweise umschließt.

## Claims

1. Method of conveying goods to be conveyed (2) with a cellular wheel sluice (1), wherein in a housing (3), the goods to be conveyed (2) are conveyed with rotor blades (5) of the rotating cellular wheel (4), and sealing lips (6) of the rotor blades (5) abut against at least one sealing surface (7) of the housing (3), wherein the cellular wheel sluice further comprises rotor blades and/or sealing lips mounted to be exchangeable,
**characterized in that**
during the transport of certain goods to be conveyed (2), such sealing lips (6) are used which are made of an abrasive material that is contained in the goods to be conveyed (2), wherein abrasion is caused by the movement of the sealing lips (6) along the at least one sealing surface (7),
**in that** the entire cellular wheel (4), the rotor blades of the cellular wheel or the sealing lips (6) are replaced when they are adapted to a particular material in the goods to be conveyed, and
**in that** as an abrasive material of the sealing lips (6), polyethylene, polypropylene, polystyrene, polymethylmethacrylate, polyamides, polyester, particularly polycarbonate and polyethylene terephthalate, polyethylene glycol, polyoxymethylene, star polymers, polyester urethane rubber, silicone and/or fluorosilicone is used.

2. Method of conveying goods to be conveyed (2) with a cellular wheel sluice (4) according to claim 1, wherein as the sealing lips (6), a lamellar or bristle structure is used.

3. Method of conveying goods to be conveyed (2) with a cellular wheel sluice (4) according to claim 1, wherein as the sealing lips (6), packs of foil elements (8) of an abrasive material are used.

4. Method of conveying goods to be conveyed (2) with a cellular wheel sluice (4) according to claim 3, wherein edges of the foil elements (8) slide along the sealing surface (7).

5. Method of conveying goods to be conveyed (2) with a cellular wheel sluice (4) according to claim 3, wherein edges of the foil elements (8) slide along the sealing surface (5) perpendicularly to the direction of motion (B) of the rotor blades (5).

6. System consisting of a goods to be conveyed and a cellular wheel sluice (1) for conveying the goods to be conveyed (2) and for carrying out the method according to one of the claims 1 - 5, comprising a housing (3) with at least one sealing surface (7) and a cellular wheel (4) rotatably arranged therein, the cellular wheel (4) comprising several rotor blades (5) with sealing lips (6) abutting against the sealing surface (7) for sealing, wherein the cellular wheel sluice further comprises rotor blades and/or sealing lips mounted to be exchangeable,
**characterized in that**
depending on the goods to be conveyed (2), the cellular wheel sluice (1) is provided with sealing lips (6) formed of an abrasive material that is contained in the goods to be conveyed (2) wherein abrasion is caused by the movement of the sealing lips (6) along the at least one sealing surface (7),
**in that** the entire cellular wheel (4), the rotor blades of the cellular wheel or the sealing lips (6) are mounted to be exchangeable, and
**in that** the sealing lips (6) comprise a material made of polyethylene, polypropylene, polystyrene, polymethylmethacrylate, polyamides, polyester, particularly polycarbonate and polyethylene terephthalate, polyethylene glycol, polyoxymethylene, star polymers, polyester urethane rubber, silicone and/or fluorosilicone, contained in the goods (2) to be conveyed.

7. System according to claim 6, wherein the sealing lips (6) comprise a lamellar and/or bristle structure.

8. System according to the preamble of claim 6, wherein the sealing lips (6) comprise packs of foil elements (8).

9. System according to claim 8, wherein the foil elements (8) are arranged perpendicularly to the direction of motion (B) of the rotor blades (5).

10. System according to at least one of claims 8 to 9, wherein the ends (8a) of the foil elements (8) and the sealing surface (7) include an angle which is within a range of 45° to 90°, or within a range of 80° to 90°.

11. System according to at least one of claims 8 to 10, wherein the foil elements (8) have a thickness within a range of 50 µm to 500 µm, or in particular within a range of 190 µm to 350 µm.

12. System according to at least one of claims 6 - 11, wherein the sealing surface (7) is arranged such that it at least partially encloses the cellular wheel (4).

## Revendications

1. Procédé pour assurer le transport d'un produit à transporter (2) à l'aide d'une vanne à roue cellulaire (1) également appelée écluse rotative ou sas alvéolaire, procédé d'après lequel le produit à transporter (2) est transporté par des pales de rotor (5) de la roue cellulaire (4) en rotation dans un carter (3), et des lèvres d'étanchéité (6) des pales de rotor (5) s'appuient sur au moins une surface d'étanchéité (7) du carter (3), la vanne à roue cellulaire comprenant par ailleurs des pales de rotor et/ou des lèvres d'étanchéité fixées de manière interchangeable,
**caractérisé**
**en ce que** lors du transport d'un produit à transporter (2) déterminé, on utilise des lèvres d'étanchéité (6) réalisées en un matériau susceptible de subir une abrasion, qui est contenu dans le produit à transporter (2), une abrasion étant produite par le mouvement de déplacement des lèvres d'étanchéité (6) le long de ladite au moins une surface d'étanchéité (7),
**en ce que** l'ensemble de la roue cellulaire (4), les pales de rotor de la roue cellulaire ou les lèvres d'étanchéité (6) sont échangées lorsqu'on les adapte à un matériau déterminé dans le produit à transporter (2), et
**en ce que** l'on utilise en guise de matériau constituant les lèvres d'étanchéité (6) et susceptible de subir une abrasion, du polyéthylène, du polypropylène, du polystyrène, du poly-méthyle-méthacrylate, des polyamides, du polyester, notamment des polycarbonates et du polyéthylène-téréphtalate, du polyéthylène-glycol, du polyoxyméthylène, des dendrimères, du caoutchouc polyester-uréthanne, des silicones et/ou silicones fluorés.

2. Procédé pour assurer le transport de produit à transporter (2) à l'aide d'une vanne à roue cellulaire (4) selon la revendication 1, d'après lequel on utilise en guise de lèvres d'étanchéité (6), une structure à lamelles ou à poils de brosse.

3. Procédé pour assurer le transport de produit à transporter (2) à l'aide d'une vanne à roue cellulaire (4) selon la revendication 1, d'après lequel on utilise en guise de lèvres d'étanchéité (6), des paquets d'éléments de feuille (8) en un matériau susceptible de subir une abrasion.

4. Procédé pour assurer le transport de produit à transporter (2) à l'aide d'une vanne à roue cellulaire (4) selon la revendication 3, d'après lequel des bords des éléments de feuille (8) glissent le long de la surface d'étanchéité (6).

5. Procédé pour assurer le transport de produit à transporter (2) à l'aide d'une vanne à roue cellulaire (4) selon la revendication 3, d'après lequel des bords des éléments de feuille (8) glissent le long de la surface d'étanchéité perpendiculairement à la direction de mouvement (B) des pales de rotor (5).

6. Système constitué d'un produit à transporter et d'une vanne à roue cellulaire (1) pour assurer le transport du produit à transporter (2) et pour la mise en œuvre du procédé selon l'une des revendications 1 - 5, le système comprenant un carter (3) avec au moins une surface d'étanchéité (7) et une roue cellulaire (4), qui y est agencée de manière rotative, la roue cellulaire (4) comportant plusieurs pales de rotor (5) avec des lèvres d'étanchéité (6), qui s'appuient sur la surface d'étanchéité (7) pour assurer une étanchéité, la vanne à roue cellulaire comprenant par ailleurs des pales de rotor et/ou des lèvres d'étanchéité fixées de manière interchangeable,
**caractérisé**
**en ce qu'**en fonction du produit à transporter (2), la vanne à roue cellulaire (1) est munie de lèvres d'étanchéité (6) réalisées en un matériau susceptible de subir une abrasion, qui est contenu dans le produit à transporter (2), une abrasion étant produite par le mouvement de déplacement des lèvres d'étanchéité (6) le long de ladite au moins une surface d'étanchéité (7),
**en ce que** l'ensemble de la roue cellulaire (4), les pales de rotor (5) sur la roue cellulaire (4) ou les lèvres d'étanchéité (6) sur les pales de rotor (5), sont fixées de manière interchangeable, et
**en ce que** les lèvres d'étanchéité (6) comprennent un matériau à base de polyéthylène, de polypropylène, de polystyrène, de poly-méthyle-méthacrylate, de polyamides, de polyester, notamment de polycarbonates et de polyéthylène-téréphtalate, de polyéthylène-glycol, de polyoxyméthylène, de dendrimères, de caoutchouc polyester-uréthanne, de silicones et/ou silicones fluorés, qui est également contenu dans le produit à transporter (2).

7. Système selon la revendication 6, dans lequel les lèvres d'étanchéité (6) présentent une structure à lamelles ou à poils de brosse.

8. Système selon le préambule de la revendication 6, dans lequel les lèvres d'étanchéité (6) comportent des paquets d'éléments de feuille (8).

9. Système selon la revendication 8, dans lequel les éléments de feuille (8) sont agencés perpendiculairement à la direction de mouvement (B) des pales de rotor (5).

10. Système selon l'une au moins des revendications 8 à 9, dans lequel les extrémités (8a) des éléments de feuille (8) et la surface d'étanchéité (7) forment ensemble un angle, qui se situe dans une plage de 45° à 90° ou dans une plage de 80° à 90°.

11. Système selon l'une au moins des revendications 8 à 10, dans lequel les éléments de feuille (8) présentent une épaisseur située dans une plage de 50 µm à 500 µm, ou notamment située dans une plage de 190 µm à 350 µm.

12. Système selon l'une au moins des revendications 6 - 11, dans lequel la surface d'étanchéité (7) est agencée de manière à entourer au moins partiellement la roue cellulaire (4).
